# EUROPÄISCHE PATENTSCHRIFT

(11) **EP 2 730 076 B1**
(45) Veröffentlichungstag und Bekanntmachung des Hinweises auf die Patenterteilung: **28.11.2018**
(21) Anmeldenummer: 12733102.3
(22) Anmeldetag: 04.07.2012
(51) Int. Cl.: H04L 29/08, H04L 29/06

(54) **DATENAUSWAHLVERFAHREN ZUR VERMINDERUNG DES DEKODIERRECHENAUFWANDS EINES FAHRZEUG-ZU-X-KOMMUNIKATIONSSYSTEMS UND FAHRZEUG-ZU-X-KOMMUNIKATIONSSYSTEM**
DATA SELECTION METHOD FOR REDUCING THE DECODING COMPUTATIONAL COMPLEXITY OF A VEHICLE-TO-X COMMUNICATION SYSTEM, AND VEHICLE-TO-X COMMUNICATION SYSTEM
PROCÉDÉ DE SÉLECTION DE DONNÉES, VISANT À RÉDUIRE LA COMPLEXITÉ DE CALCUL DE DÉCODAGE D'UN SYSTÈME DE VÉHICULES À X COMMUNICATIONS, ET SYSTÈME DE VÉHICULES À X COMMUNICATIONS CORRESPONDANT

(30) Priorität: 05.07.2011 DE 102011078704
(43) Veröffentlichungstag der Anmeldung: 14.05.2014
(73) Patentinhaber: Continental Teves AG & Co. OHG, 60488 Frankfurt am Main (DE)
(72) Erfinder: STÄHLIN, Ulrich, 65760 Eschborn (DE); SCHERPING, Richard, 44227 Dortmund (DE)
(86) Internationale Anmeldenummer: PCT/EP2012/063043
(87) Internationale Veröffentlichungsnummer: WO 2013/004750

(56) Entgegenhaltungen:
- WO-A2-02/056147
- DE-A1-102007 053 255
- DE-T2- 60 116 964
- US-A1- 2011 069 835
- OLIVER SANDER ET AL: "Design of a Vehicle-to-Vehicle communication system on reconfigurable hardware", FIELD-PROGRAMMABLE TECHNOLOGY, 2009. FPT 2009. INTERNATIONAL CONFERENCE ON, IEEE, PISCATAWAY, NJ, USA, 9. Dezember 2009 (2009-12-09), Seiten 14-21, XP031599367, ISBN: 978-1-4244-4375-8
- GLAS B ET AL: "Car-to-Car Communication Security on Reconfigurable Hardware", 2009 IEEE 69TH VEHICULAR TECHNOLOGY CONFERENCE; APRIL 26-29, 2009, BARCELONA, SPAIN, IEEE, PISCATAWAY, NJ, USA, 26. April 2009 (2009-04-26), Seiten 1-5, XP031474380, ISBN: 978-1-4244-2517-4
- "Intelligent Transport Systems (ITS); Vehicular Communications; Basic Set of Applications; Part 3: Specifications of Decentralized Environmental Notification Basic Service", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS WG1, Nr. V1.1.1, 1. September 2010 (2010-09-01), XP014061382,
- "Intelligent Transport Systems (ITS); Vehicular Communications; Basic Set of Applications; Part 2: Specification of Cooperative Awareness Basic Service", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS WG1, Nr. V1.2.1, 1. März 2011 (2011-03-01), XP014064618,

## Beschreibung

Die Erfindung betrifft ein Datenauswahlverfahren zur Verminderung des Dekodierrechenaufwands eines Fahrzeug-zu-X-Kommunikationssystems gemäß Oberbegriff von Anspruch 1, ein Fahrzeug-zu-X-Kommunikationssystem gemäß Oberbegriff von Anspruch 11 sowie deren Verwendung.

Im Stand der Technik sind bereits Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Um die zur Datenübertragung zur Verfügung stehende, begrenzte Anzahl von Kommunikationskanälen nicht zu überlasten, werden die übertragenen Fahrzeug-zu-Botschaften oftmals zumindest anteilig komprimiert. Auch eine Kompatibilisierung des Datenformats der Fahrzeug-zu-Botschaften ist im Stand der Technik bekannt, um voneinander verschiedenartigen Fahrzeug-zu-X-Kommunikationssystemen eine wechselseitige Kommunikation zu ermöglichen. Aufgrund der hohen Anforderungen an die Zuverlässigkeit und Datensicherheit von mittels Fahrzeug-zu-X-Kommunikation übertragenen Informationen, werden derartige Informationen zusätzlich oftmals mit einer aufwändigen Sicherheitssignatur versehen.

Die DE 10 2008 060 231 A1 beschreibt in diesem Zusammenhang ein Verfahren zum Selektieren von unterschiedlichen, mittels Fahrzeug-zu-X-Kommunikation übertragenen Daten. Anhand eines Daten-Frames werden die empfangenen Daten von einem Datenfilter in der Empfangsvorrichtung unterschieden und beispielsweise an ein Fahrerassistenzsystem oder eine Unterhaltungseinrichtung weitergeleitet. Dies ermöglicht eine Sortierung der empfangenen Daten vor deren eigentlichen Verarbeitung. Zur Übertragung der Daten werden Sende- und Empfangseinrichtungen auf Basis der WLAN-Standards 802.11a/b/g/n bei 2,4 GHz oder des WLAN-Standards 802.11p bei 5,9 GHz genutzt. Um die Daten redundant zu übertragen und die Zuverlässigkeit der Übertragung zu steigern, ist auch ein gleichzeitiges Senden auf beiden WLAN-Frequenzen möglich.

In der unveröffentlichten DE 10 2011 003 624 wird ein Verfahren zur Reduzierung der Datenauslastung eines Fahrzeug-zu-X-Kommunikationskanals beschrieben, bei welchem eine Fahrzeug-zu-X-Botschaft in wenigstens einer ersten und einer zweiten Teilbotschaft über verschiedene Kommunikationskanäle übertragen wird. Die erste Teilbotschaft enthält dabei verkehrssicherheitsrelevante Informationen, während die zweite Teilbotschaft einen Security Header und teilweise zur ersten Teilbotschaft identische verkehrssicherheitsrelevante Informationen umfasst. Der für die Datensicherheit relevante Anteil einer Gesamtbotschaft wird somit ausschließlich über die zweite Teilbotschaft versendet, wodurch der Datenumfang der ersten Teilbotschaft gering bleibt. Die Prüfung der Datensicherheit und Zuverlässigkeit der ersten Teilbotschaft kann dann über die zweite Teilbotschaft erfolgen, indem die in beiden Botschaften jeweils enthaltenen verkehrssicherheitsrelevanten Informationen verglichen werden. Sofern diese Informationen übereinstimmen, wird auch den ausschließlich in der ersten Teilbotschaft enthaltenen verkehrssicherheitsrelevanten Informationen vertraut. Eine rechenintensive Auswertung eines Security Headers oder eine Dekodierung der ersten Botschaft sind daher ebenfalls nicht notwendig.

Aus der DE 10 2007 053 255 A1 geht ein Verfahren zum Bearbeiten von Nachrichten hervor, wobei eine jeweilige Nachricht zumindest ein Authentifizierungselement und einen Nachrichteninhalt umfasst. Die jeweilige Nachricht wird empfangen, in dem Empfangspuffer abgelegt, und eine Kenngröße einer Priorität hinsichtlich einer Sicherheitsüberprüfung der jeweiligen Nachricht wird abhängig von dem Nachrichteninhalt ermittelt. Eine Bearbeitungsfolge für eine weitere Nachrichtenbearbeitung hinsichtlich der Sicherheitsüberprüfung unter Berücksichtigung des jeweiligen zumindest einen Authentifizierungselements wird abhängig von den Werten der Kenngröße der Priorität festgelegt und durchgeführt.

Die unveröffentlichte DE 10 2011 006 305 offenbart ein Verfahren zur Reduzierung der Rechenlast bei einer Datensicherheitsprüfung von mittels Fahrzeug-zu-X-Kommunikation empfangenen Datenpaketen. Die Datensicherheitsprüfung besteht hier aus dem Überprüfen einer mittels kryptografischer Algorithmen verschlüsselten Signatur, welche mit hohem Rechenaufwand verbunden ist und den Einsatz dedizierter Elektronik erforderlich macht. Zur Reduzierung der Rechenlast wird zunächst eine Vorverarbeitung der empfangenen Fahrzeug-zu-X-Botschaften vorgenommen, welche diese in unterschiedliche Kategorien priorisiert. Die Priorisierung kann dabei an Hand unterschiedlicher Kriterien, wie z.B. Abstand des Senders zum EMpfänger oder TTC (time to collision) des Senders zum Empfänger erfolgen. Zunächst werden nur die Signaturen von mit hoher Priorität versehenen Datenpaketen überprüft. Falls anschließend noch freie Rechenkapazität zur Verfügung steht, werden weitere Datenpakete überprüft. Ebenso wird die Möglichkeit beschrieben, den Inhalt eines Datenpakets mittels Umfeldsensordaten zu verifizieren, wodurch eine Überprüfung der Signatur überflüssig wird.

Allen im Stand der Technik bekannten Fahrzeug-zu-X-Kommunikationsverfahren ist jedoch gemein, dass, sofern eine Priorisierung oder anderweitige Vorsortierung der empfangenen Informationen bzw. eine Aufspaltung der gesendeten Informationen in mehrere Teilbotschaften vorgenommen wird, diese nur im Hinblick auf eine Reduzierung der zur Datensicherheitsprüfung aufzuwendenden Rechenleistung stattfindet. Im Gegenteil ist es sogar bekannt, zunächst die Nutzdaten einer Fahrzeug-zu-X-Botschaft zu dekodieren und abhängig von deren Informationsinhalt ggf. auf eine Datensicherheitsprüfung zu verzichten. Der zur Dekodierung der Nutzdaten notwendigen Rechenleistung wird im Stand der Technik hingegen keine Beachtung geschenkt, obwohl die gegenwärtig hierzu verwendeten Prozessoren aufgrund ihrer benötigten Rechenkapazität mit vergleichsweise hohen Herstellungskosten verbunden sind.

Die Aufgabe der vorliegenden Erfindung ist es daher, den Dekodierrechenaufwand eines Fahrzeug-zu-X-Kommunikationssystems im Hinblick auf die Nutzdatenanteile von empfangenen Fahrzeug-zu-X-Botschaften zu vermindern.

Diese Aufgabe wird erfindungsgemäß durch das Auswahlverfahren zur Verminderung des Dekodierrechenaufwands eines Fahrzeug-zu-X-Kommunikationssystems gemäß Anspruch 1, das Fahrzeug-zu-X-Kommunikationssystems gemäß Anspruch 11 und der Verwendung gemäß Anspruch 15 gelöst. Weitere vorteilhafte Aspekte der Erfindung sind in den abhängigen Ansprüchen 2-10 und 12-14 dargelegt.

Die Erfindung betrifft ein Datenauswahlverfahren zur Verminderung des Dekodierrechenaufwands eines Fahrzeug-zu-X-Kommunikationssystems werden mittels einer Kommunikationseinheit Fahrzeug-zu-X-Botschaften empfangen und versendet, wobei die Fahrzeug-zu-X-Botschaften jeweils mindestens einen Nutzdatenanteil und jeweils mindestens einen Kopfdatenanteil umfassen. Der jeweils mindestens eine Kopfdatenanteil wird dabei unkodiert übertragen und der jeweils mindestens eine Nutzdatenanteil wird kodiert übertragen. Das Verfahren zeichnet sich dadurch aus, dass auf Grundlage des jeweils mindestens einen Kopfdatenanteils eine Gewichtung von empfangenen Fahrzeug-zu-X-Botschaften untereinander in wenigstens zwei Kategorien vorgenommen wird, wobei eine Dekodierung des jeweils mindestens einen Nutzdatenanteils gewichtungsabhängig erfolgt. Durch die Gewichtung der empfangenen Fahrzeug-zu-X-Botschaften im Rahmen des erfindungsgemäßen Verfahrens ergibt sich der Vorteil, dass nicht alle Nutzdatenanteile der empfangenen Fahrzeug-zu-X-Botschaften unabhängig von ihrer Relevanz für das eigene Fahrzeuge dekodiert werden müssen. Dies wiederum ermöglicht es, mit deutlich reduzierter Auslegung der Rechenleistung der Kodiereinheit und somit deutlich geringeren Herstellungskosten dennoch alle relevanten Informationen zu erlangen und ggf. weiterzuverarbeiten bzw. darauf zu reagieren. Der unverschlüsselt übertragene Kopfdatenanteil und die darin enthaltenen, direkt lesbaren und verarbeitbaren Informationen, bieten dabei eine unaufwändig auswertbare Grundlage zur zuverlässigen Gewichtung der Fahrzeug-zu-X-Botschaften.

Bevorzugt ist es vorgesehen, dass eine Kodierung des mindestens einen Nutzdatenanteils eine Datenkomprimierung und/oder eine Datenkompatibilisierung umfasst und die Dekodierung des mindestens einen Nutzdatenanteils eine Datenentkomprimierung und/oder eine systemabhängige Datenumwandlung umfasst. Indem die Kodierung eine Datenkomprimierung bzw. eine Datenkompatibilisierung der zu sendenden Fahrzeug-zu-X-Botschaften umfasst, wird einerseits das Volumen des Datentransfers möglichst gering gehalten. Dies ist im Hinblick auf die für die Fahrzeug-zu-X-Kommunikation vorgesehene, begrenzte Übertragungsbandbreite bei der gleichzeitig großen Zahl von Kommunikationsteilnehmern ein wichtiger Vorteil. Andererseits wird durch die Kompatibilisierung sichergestellt, dass auch Kommunikationsteilnehmer mit unterschiedlichen Fahrzeug-zu-X-Kommunikationssystemen untereinander kommunizieren können, unabhängig von einem intern verwendeten, ggf. herstellerabhängigen Datenformat.

In einer weiteren bevorzugten Ausführungsform ist es vorgesehen, dass der mindestens eine Kopfdatenanteil mindestens eine der folgenden Informationen umfasst:
- satellitengestützte Positionsinformation eines Senders,
- Geschwindigkeitsinformation des Senders,
- Ausrichtungsinformation des Senders,
- Identitätsinformation des Senders,
- Zeitstempel,
- Gattungsinformation der Fahrzeug-zu-X-Botschaft und
- Genauigkeitskennzeichung mindestens einer der insgesamt umfassten Informationen.
Diese Informationen bieten eine sichere Grundlage zur Gewichtung empfangener Fahrzeug-zu-X-Botschaften im Hinblick auf deren Relevanz für den Empfänger. So können beispielsweise Fahrzeug-zu-X-Botschaften von Sendern, welche sich weit genug vom Empfänger entfernt befinden, welche sich hinter dem Empfänger befinden und gleichzeitig eine andere Ausrichtung aufweisen, oder auch Fahrzeug-zu-X-Botschaften, deren Zeitstempel eine bestimmte Zeitschwelle überschritten hat und die Fahrzeug-zu-X-Botschaft als nicht mehr aktuell kennzeichnet, im Hinblick auf die Dekodierung als vergleichsweise weniger relevant bzw. als irrelevant gewichtet werden.

Zweckmäßigerweise ist es vorgesehen, dass der Kopfdatenanteil ein im Wesentlichen von allen an sich bekannten Fahrzeug-zu-X-Kommunikationssystemen ohne vorausgehende Dekodierung verarbeitbares Datenformat besitzt. Daraus ergibt sich der Vorteil, dass der Kopfdatenanteil sofort auf einfache Art und Weise von allen Empfängern zur Gewichtung empfangener Fahrzeug-zu-X-Botschaften genutzt werden kann. Ein gesonderter Kompatibilisierungsschritt, um den Kopfdatenanteil in ein geeignetes Datenformat zu konvertieren, ist damit nicht notwendig. Dies vermeidet sowohl unnötigen Rechenaufwand als auch das Vorhalten zusätzlicher Rechenkapazität.

Außerdem ist es vorteilhaft, dass die wenigstens zwei Kategorien die ihnen zugeordneten Fahrzeug-zu-X-Botschaften als "relevant" oder "irrelevant" kennzeichnen, wobei nur als "relevant" gekennzeichnete Botschaften dekodiert werden.

Dies ist eine ebenso einfache wie effektive Möglichkeit, Fahrzeug-zu-X-Botschaften zu kategorisieren bzw. zu gewichten und somit den Dekodierrechenaufwand deutlich zu reduzieren.

Weiterhin ist es bevorzugt, dass die Gewichtung der während des Fahrzeugbetriebs empfangenen Fahrzeug-zu-X-Botschaften in Abhängigkeit mindestens eines der folgenden Faktoren anpassbar ist:
- Eigengeschwindigkeit des Empfängers,
- Relativgeschwindigkeit des Empfängers zum Sender,
- Abstand des Empfängers zum Sender,
- voraussichtlicher Eintrittszeitpunkt des Senders in eine kritische Zone rund um den Empfänger,
- relativen Fahrtrichtung des Empfängers zum Sender und
- Straßenklasse,
wobei die kritische Zone eine anpassbare Ausdehnung und Ausformung aufweist und wobei die Straßenklasse abhängig von einer zulässigen Höchstgeschwindigkeit und/oder einer Fahrbahnbreite und/oder einer Anzahl von Fahrbahnen und/oder einer Nähe zu Ortschaften und/oder von Wetterverhältnissen gebildet wird. Somit ist gewährleistet, dass bei der Gewichtung der Fahrzeug-zu-X-Botschaften stets den vorliegenden Umständen Rechnung getragen wird und alle Fahrzeug-zu-X-Botschaften von aktueller Relevanz dekodiert und ausgewertet werden.

In einer weiteren bevorzugten Ausführungsform der Erfindung ist es vorgesehen, dass die Gewichtung in eine der Anzahl der empfangenen Fahrzeug-zu-X-Botschaften entsprechende Anzahl von Kategorien vorgenommen wird, wobei die Nutzdatenanteile der empfangenen Fahrzeug-zu-X-Botschaften in absteigender Gewichtungsreihenfolge dekodiert werden bis die Rechenkapazität erschöpft ist oder alle Nutzdatenanteile der empfangenen Fahrzeug-zu-X-Botschaften dekodiert sind. Eine Gewichtung in eine der Anzahl der empfangenen Fahrzeug-zu-X-Botschaften entsprechende Anzahl von Kategorien bietet den Vorteil einer sehr feinen Abstufung der einzelnen Kategorien, da diese untereinander in der Reihenfolge ihrer Relevanz sortiert werden. Je relevanter eine Fahrzeug-zu-X-Botschaft ist, desto höher ist ihre Gewichtung. Die zur Verfügung stehende Rechenkapazität wird weitestgehend optimal ausgeschöpft, da alle empfangenen Fahrzeug-zu-X-Botschaften in absteigender Gewichtungsreihenfolge dekodiert werden, bis die Rechenkapazität erschöpft ist oder alle Nutzdatenanteile dekodiert sind. Solange noch unkodierte Nutzdatenanteile vorliegen und noch Rechenkapazität zur Verfügung steht, wird der Dekodiervorgang weiterer Fahrzeug-zu-X-Botschaften nicht abgebrochen.

Vorzugsweise zeichnet sich das erfindungsgemäße Verfahren dadurch aus, dass der Dekodierung des Nutzdatenanteils eine an sich bekannte Datensicherheitsprüfung eines Datensicherheitsanteils der Fahrzeug-zu-X-Botschaft, insbesondere eine an sich bekannte Datensicherheitsprüfung eines von der Fahrzeug-zu-X-Botschaft umfassten digitalen Datensicherheitszertifikats, vorausgeht. Dadurch wird es möglich, die Anzahl der zu dekodierenden Nutzdatenanteile weiter zu reduzieren, da eine Fahrzeug-zu-X-Botschaft, deren Datensicherheitsprüfung die Fahrzeug-zu-X-Botschaft als nicht vertrauenswürdig ausweist, sinnvollerweise im Anschluss an die Datensicherheitsprüfung nicht dekodiert wird. Ein Informationsverlust entsteht durch dieses Vorgehen trotzdem nicht, da der Informationsinhalt des Nutzdatenanteils nicht als nicht vertrauenswürdig erkannt wurde und daher ohnehin nach seiner Dekodierung aus Sicherheitsgründen nicht weiter verarbeitet würde.

Weiterhin ist es vorteilhaft, dass eine Weiterverarbeitung des dekodierten Nutzdatenanteils von mindestens einem Fahrerassistenzsystem durchgeführt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist. Daraus ergibt sich der Vorteil, dass die Nutzdaten der empfangenen Fahrzeug-zu-X-Botschaften zur Abwendung von Gefahrensituationen und ggf. sogar zur Unfallvermeidung ohne Mitwirken des Fahrers bzw. entgegen einer Steuereingabe des Fahrers verwendet werden können.

Besonders bevorzugt ist es vorgesehen, dass die Kodierung nach dem ASN.1-Standard erfolgt. Dieser Standard wurde im Zusammenhang mit Fahrzeug-zu-X-Kommunikation bereits erfolgreich von der ETSI (European Telecommunications Standards Institute) getestet und wird voraussichtlich bei zukünftig verwendeten Fahrzeug-zu-X-Kommunikationssystemen Anwendung finden.

Die Erfindung betrifft weiter ein Fahrzeug-zu-X-Kommunikationssystem, welches insbesondere eine Ausführungsform des erfindungsgemäßen Verfahrens ausführt und umfasst eine Kommunikationseinheit zum Empfangen und Versenden von Fahrzeug-zu-X-Botschaften, eine Generierungseinheit zum Generieren von zu versendenden Fahrzeug-zu-X-Botschaften mit jeweils mindestens einem Kopfdatenanteil und jeweils mindestens einem Nutzdatenanteil, eine Kodiereinheit zum Kodieren des jeweils mindestens einen Nutzdatenanteils der zu versendenden Fahrzeug-zu-X-Botschaften und zum Dekodieren eines jeweils mindestens einen kodierten Nutzdatenanteils von empfangenen Fahrzeug-zu-X-Botschaften sowie eine Gewichtungseinheit zum Verarbeiten eines jeweils mindestens einen unkodierten Kopfdatenanteils der empfangenen Fahrzeug-zu-X-Botschaften. Das erfindungsgemäße System zeichnet sich dadurch aus, dass die Gewichtungseinheit eine Gewichtung der empfangenen Fahrzeug-zu-X-Botschaften untereinander in wenigstens zwei Kategorien auf Grundlage des jeweils mindestens einen Kopfdatenanteils vornimmt und die Kodiereinheit eine Dekodierung des jeweils mindestens einen Nutzdatenanteils gewichtungsabhängig durchführt. Das erfindungsgemäße System umfasst somit alle notwendigen Vorrichtungen zur Ausführung des erfindungsgemäßen Verfahrens und ermöglicht auf einfache Weise eine Reduzierung des notwendigen Dekodierrechenaufwands. Daraus ergeben sich die bereits beschriebenen Vorteile.

Vorzugsweise zeichnet sich das oben genannte System dadurch aus, dass das System zusätzlich eine Datensicherheitseinheit zum Erstellen eines Datensicherheitsanteils der zu versendenden Fahrzeug-zu-X-Botschaften und zum Prüfen des Datensicherheitsanteils der empfangenen Fahrzeug-zu-X-Botschaften umfasst. Dadurch können Fahrzeug-zu-X-Botschaften unabhängig von ihrer Gewichtung bzw. Relevanz auch auf ihre Zuverlässigkeit überprüft werden. Im Hinblick darauf, dass die Fahrzeug-zu-X-Botschaften ggf. von geeigneten Fahrerassistenzsystemen als Grundlage für autonome Fahrzeugsteuereingriffe verwendet werden, ermöglicht die Datensicherheitseinheit somit eine Steigerung der Fahrzeugsicherheit im Verkehr.

Weiterhin ist es vorteilhaft, dass die Kommunikationseinheit und/oder die Generierungseinheit und/oder die Gewichtungseinheit und/oder die Kodiereinheit und/oder die Datensicherheitseinheit einen gemeinsamen Chipsatz, insbesondere ein gemeinsames elektronisches Rechenwerk umfassen. Somit ergibt sich der Vorteil, dass nicht jede der genannten Vorrichtungen mit einem eigenen Rechenwerk versehen werden muss, was sowohl den Herstellungsprozess weiter vereinfacht als auch die Produktionskosten weiter reduziert. Durch den gemeinsamen Zugriff unterschiedlicher Vorrichtungen auf dasselbe Rechenwerk ergibt sich zudem eine effektive und schnelle Datenverknüpfung der Vorrichtungen.

Bevorzugt ist es vorgesehen, dass die Kommunikationseinheit zur Kommunikation mittels mindestens einer der folgenden Verbindungsarten ausgebildet ist:
- WLAN-Verbindung, insbesondere nach IEEE 802.11,
- ISM-Verbindung (Industrial, Scientific, Medical Band),
- Bluetooth,
- ZigBee,
- UWB,
- WiMax,
- Infrarotverbindung und
- Mobilfunkverbindung.
Diese Verbindungsarten bieten dabei unterschiedliche Vorteile, je nach Art, Wellenlänge und verwendetem Datenprotokoll. So ermöglichen einige der genannten Verbindungsarten z.B. eine vergeleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Des Weiteren betrifft die vorliegende Erfindung eine Verwendung des Verfahrens zur Verminderung des Dekodierrechenaufwands eines Fahrzeug-zu-X-Kommunikationssystems in einem Kraftfahrzeug.

Weitere bevorzugte Ausführungsformen ergeben sich der nachfolgenden Beschreibung eines Ausführungsbeispiels an Hand von Figuren.

Es zeigt
- Fig. 1: ein Flussdiagramm, welches die einzelnen Ablaufschritte einer möglichen Ausführungsform des erfindungsgemäßen Verfahrens darstellt,
- Fig. 2: schematisch eine Verkehrssituation, in der das erfindungsgemäße Verfahren zum Einsatz kommt,
- Fig. 3: schematisch die Datenstruktur einer Fahrzeug-zu-X-Botschaft und
- Fig. 4: schematisch einen möglichen Aufbau des erfindungsgemäßen Systems.

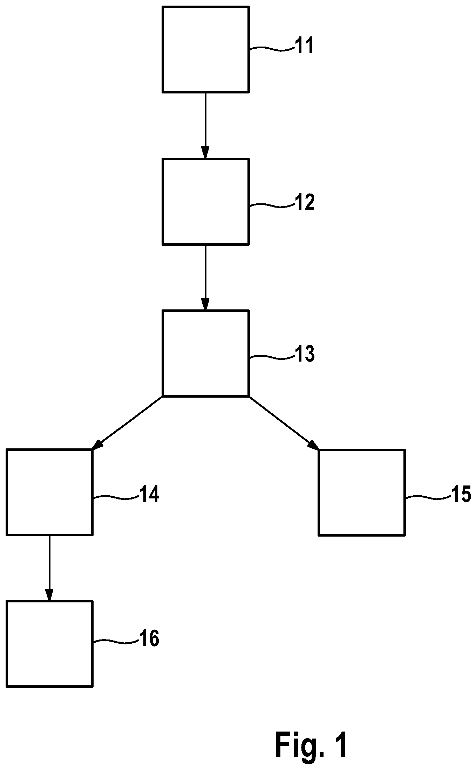

Fig. 1 zeigt den Ablauf eines Ausführungsbeispiels des erfindungsgemäßen Verfahrens als Flussdiagramm. In Schritt 11 wird eine Fahrzeug-zu-X-Botschaft mittels einer Kommunikationseinheit empfangen. Im folgenden Schritt 22 wird der Kopfdatenanteil der Fahrzeug-zu-X-Botschaft gelesen und ausgewertet. Abhängig von der Auswertung des Kopfdatenanteils wird in Schritt 13 eine Gewichtung der Fahrzeug-zu-X-Botschaft vorgenommen, welche die Fahrzeug-zu-X-Botschaft entweder in Schritt 14 als "relevant" oder in Schritt 15 als "irrelevant" kennzeichnet. Eine in Schritt 14 als "relevant" gekennzeichnete Fahrzeug-zu-X-Botschaft wird anschließend in Schritt 16 mittels einer Kodiereinheit dekodiert. Eine in Schritt 15 als "irrelevant" gekennzeichnte Fahrzeug-zu-X-Botschaft wird nicht weiter verarbeitet, da der Nutzdatenanteil dieser Fahrzeug-zu-X-Botschaft mit großer Wahrscheinlichkeit keine Informationen enthält, die für den Empfänger von Bedeutung sind.

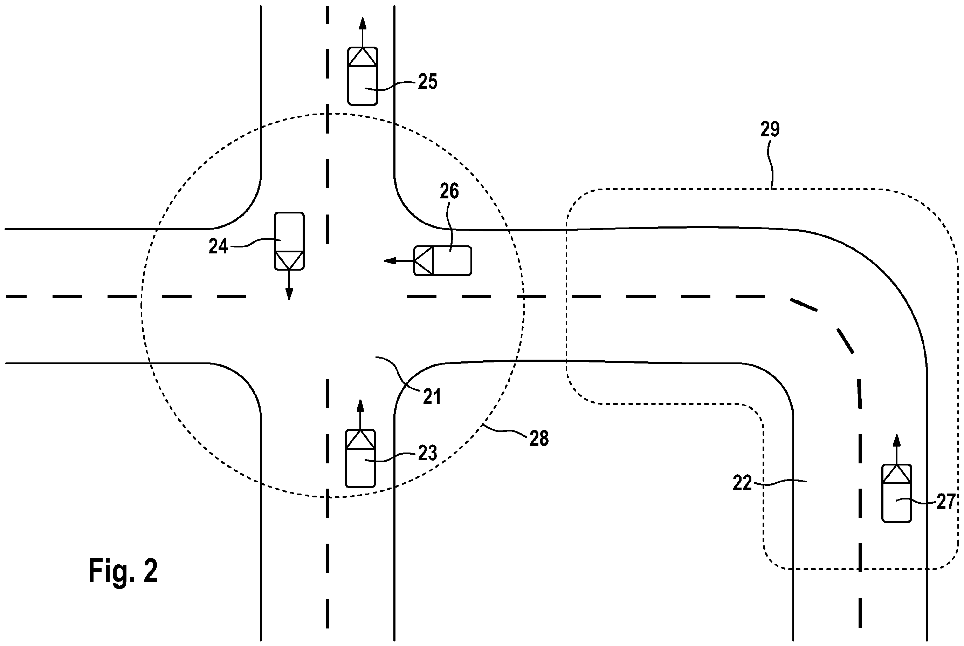

In Fig. 2 ist schematisch eine Verkehrssituation dargestellt, in der ein Ausführungsbeispiel des erfindungsgemäßen Verfahrens zum Einsatz kommt. Fahrzeug 23 ist mit einem Fahrzeug-zu-X-Kommunikationssystem ausgerüstet, welches das erfindungsgemäße Datenauswahlverfahren zur Verminderung des Dekodierrechenaufwands ausführt und fährt in Kreuzung 21 ein. Die Fahrtrichtung von Fahrzeug 23 ist durch einen Pfeil dargestellt. Ebenfalls in Kreuzung 21 fahren Fahrzeuge 24 und 26 ein, welche ebenfalls mit Fahrzeug-zu-X-Kommunikationssystemen ausgestattet sind. Auch Fahrzeug 25, welches Kreuzung 21 soeben passiert hat, verfügt über ein Fahrzeug-zu-X-Kommunikationssystem. Die Fahrtrichtungen von Fahrzeugen 24, 25 und 26 sind jeweils durch Pfeile angegeben. Fahrzeuge 24, 25 und 26 senden mit einer Sendefrequenz von 10 Hz jeweils Fahrzeug-zu-Botschaften, welche aus einem kodierten Nutzdatenanteil und einem unkodierten Kopfdatenanteil bestehen. Der Kopfdatenanteil enthält dabei jeweils eine GPS-basierte Positionsinformation des sendenden Fahrzeugs, eine Geschwindigkeitsangabe des Senders und eine Ausrichtungsinformation des Senders. Fahrzeug 24 sendet zusätzlich einen im Kopfdatenanteil enthaltenen Zeitstempel, welcher auf GPS-Informationen basiert und die von Fahrzeug 24 gesendeten Fahrzeug-zu-X-Botschaften als aktuell kennzeichnet. Fahrzeug 23 empfängt die von Fahrzeugen 24, 25 und 26 gesendeten Fahrzeug-zu-X-Botschaften und führt das erfindungsgemäße Verfahren aus, um nicht alle Nutzdatenanteile der empfangenen Fahrzeug-zu-X-Botschaften dekodieren zu müssen. Dazu werden zunächst die unkodiert übertragenen GPS-Positionen von Fahrzeugen 24, 25 und 26 ausgewertet. Die GPS-Position von Fahrzeug 25 ergibt dabei, dass sich Fahrzeug 25 außerhalb von kritischer Zone 28 von Fahrzeug 23 befindet und sich zudem mit hoher Geschwindigkeit von Fahrzeug 23 entfernt, wodurch sich der Abstand zwischen Fahrzeugen 23 und 25 schnell vergrößert. Die empfangenen Fahrzeug-zu-X-Botschaften von Fahrzeug 25 werden daher als "irrelevant" gekennzeichnet und nicht dekodiert. Kritische Zone 28 ist beispielsgemäß sowohl von der Ausdehnung als auch von der Ausformung an Kreuzung 21 angepasst. Die Anpassung basiert dabei auf Informationen eines in Fahrzeug 23 vorhandenen Navigationssystems, auf digitalem Kartenmaterial und auf der Eigengeschwindigkeit von Fahrzeug 23. Die GPS-Positionen von Fahrzeugen 24 und 26 hingegen liegen bereits innerhalb von kritischer Zone 28 und werden entsprechend als "relevant" gekennzeichnet und dekodiert.

Außerdem ist Fahrzeug 27 in Fig. 2 dargestellt, welches auf Straße 22 fährt und sich Kreuzung 21 nähert. Beispielsgemäß führt Fahrzeug 27 das erfindungsgemäße Verfahren aus. Kritische Zone 29 von Fahrzeug 27 ist an den Straßenverlauf von Straße 22, die Straßenklasse von Straße 22 und die Eigengeschwindigkeit von Fahrzeug 27 angepasst. Da sich keine Sender in kritischer Zone 29 befinden, werden im Rahmen der Gewichtung der empfangenen Fahrzeug-zu-X-Botschaften keine Fahrzeug-zu-X-Botschaften als relevant gekennzeichnet. Um die zur Verfügung stehende Rechenkapazität nicht ungenutzt zu lassen, werden die von Fahrzeugen 23, 24, 25 und 26 gesendeten Fahrzeug-zu-X-Botschaften dekodiert und ausgewertet.

Gemäß einem weiteren Ausführungsbeispiel in Fig. 2 gewichtet Fahrzeug 23 die empfangenen Fahrzeug-zu-X-Botschaften nicht ausschließlich als "relevant" und "irrelevant", sondern gewichtet sie untereinander in eine der Anzahl der empfangenen Fahrzeug-zu-X-Botschaften entsprechende Anzahl von Kategorien, so dass alle Fahrzeug-zu-X-Botschaften nach ihrer Relevanz sortiert werden. Die relevantesten Fahrzeug-zu-X-Botschaften kommen dabei von Fahrzeug 26, welches eine mögliche Kollisionsgefahr darstellt. Daher werden die Fahrzeug-zu-X-Botschaften von Fahrzeug 26 zuerst dekodiert. Die noch zur Verfügung stehende Restrechenkapazität wird nun aufgewandt, um weitere empfangene Fahrzeug-zu-X-Botschaften in absteigender Gewichtungsreihenfolge zu dekodieren.

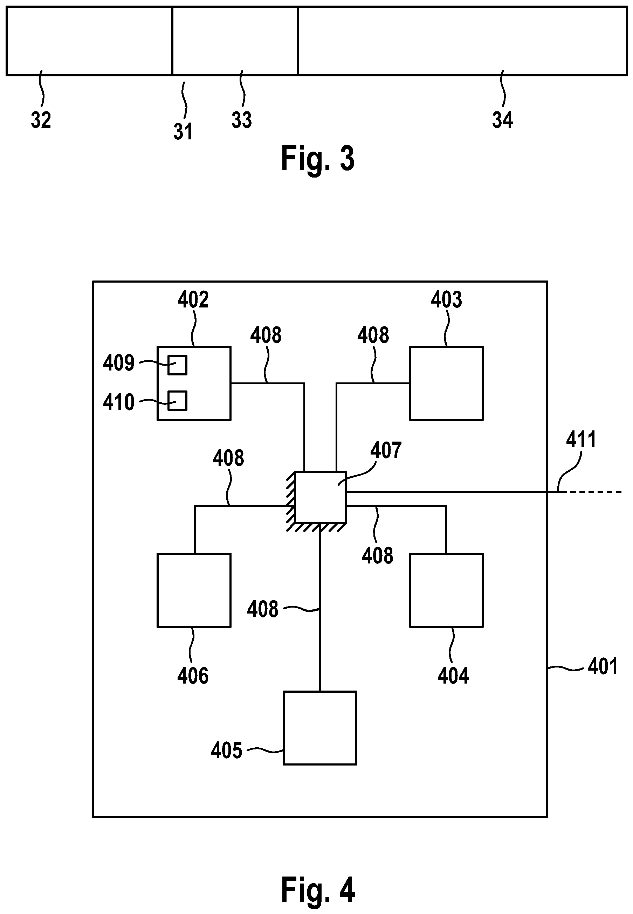

Das Ausführungsbeispiel in Fig. 3 zeigt die Datenstruktur von Fahrzeug-zu-X-Botschaft 31. Fahrzeug-zu-X-Botschaft 31 umfasst Kopfdatenanteil 32, Datensicherheitsanteil 33 und Nutzdatenanteil 34. Kopfdatenanteil 32, Datensicherheitsanteil 33 und Nutzdatenanteil 34 können ihrerseits in weitere Unteranteile gegliedert sein, was in diesem Ausführungsbeispiel jedoch nicht der Fall ist. Kopfdatenanteil 32 ist unkodiert, Datensicherheitsanteil 33 ist digital verschlüsselt und umfasst ein Datensicherheitszertifikat und Nutzdatenanteil 34 ist im ASN.1-Format kodiert.

In Fig. 4 ist Fahrzeug-zu-X-Kommunikationssystem 401 dargestellt, welches zur Ausführung zumindest einer Ausführungsform des erfindungsgemäßen Verfahrens ausgelegt ist. Fahrzeug-zu-X-Kommunikationssystem 401 umfasst Kommunikationseinheit 402, Kodiereinheit 403, Generierungseinheit 406, Gewichtungseinheit 404 und Datensicherheitseinheit 405, welche über Datenleitungen 408 mit elektronischem Rechenwerk 407 verbunden sind. Kommunikationseinheit 402 verfügt über WLAN-Verbindungsmittel 409 nach IEEE 802.11 und über Mobilfunkverbindungsmittel 410 zum Empfangen und Versenden von Fahrzeug-zu-X-Botschaften. Generierungseinheit 406 generiert die zu versendenden Fahrzeug-zu-X-Botschaften in einem Kopfdatenanteil, einem Nutzdatenanteil und einem Datensicherheitsanteil. In diesem Ausführungsbeispiel werden empfangene Fahrzeug-zu-X-Botschaften zunächst von Datensicherheitseinheit 405 im Hinblick auf ihre Datensicherheit und Zuverlässigkeit überprüft. Fahrzeug-zu-X-Botschaften von böswilligen Sendern mit bewusst falschem Informationsinhalt werden so erkannt und verworfen. Die verbleibenden Fahrzeug-zu-X-Botschaften werden dann an Gewichtungseinheit 404 weitergegeben. Gewichtungseinheit 404 verarbeitet die unkodierten Kopfdatenanteile der empfangenen, von Datensicherheitseinheit 405 weitergegebenen Fahrzeug-zu-X-Botschaften und gewichtet die Fahrzeug-zu-X-Botschaften auf Grundlage der Kopfdatenanteile. Die Gewichtung wird dabei in die zwei Kategorien "relevant" und "irrelevant" vorgenommen, wobei Kodiereinheit 403 nur Nutzdatenanteile von Fahrzeug-zu-X-Botschaften dekodiert, die zuvor als "relevant" gekennzeichnet wurden. Kodiereinheit 403 kodiert die Nutzdatenanteile von zu versendenden Fahrzeug-zu-X-Botschaften nach dem ASN.1-Standard und dekodiert die Nutzdatenanteile von empfangenen Fahrzeug-zu-X-Botschaften, sofern eine Dekodierung nach Maßgabe der Gewichtung der Fahrzeug-zu-X-Botschaften vorgesehen ist. Von Gewichtungseinheit 404 als "irrelevant" gekennzeichnete Fahrzeug-zu-X-Botschaften werden von Kodiereinheit 403 nicht dekodiert und daher von Fahrzeug-zu-X-Kommunikationssystem 401 nicht weiter verarbeitet. Über Datenleitung 411 werden die dekodierten Nutzdatenanteile entsprechenden Fahrzeugsystemen und Fahrerassistenzsystemen zur Verfügung gestellt. Da alle zu Fahrzeug-zu-X-Kommunikationssystem 401 gehörigen Vorrichtungen gemeinsam auf elektronisches Rechenwerk 407 zugreifen, ist ein schneller und effektiver Datenaustausch der Vorrichtungen untereinander gewährleistet. Ebenso kann die von elektronischem Rechenwerk 407 zur Verfügung gestellte Rechenkapazität flexibel und nach Bedarf den unterschiedlichen Vorrichtungen zur Verfügung gestellt werden. Da aufgrund der vorgenommenen Gewichtung der Fahrzeug-zu-X-Botschaften nur die als "relevant" gekennzeichneten Fahrzeug-zu-X-Botschaften dekodiert von Kodiereinheit 403 dekodiert werden, kann die Rechenkapazität von elektronischem Rechenwerk 407 entsprechend reduziert ausgelegt werden, was die Herstellungskosten des Gesamtsystems reduziert.

## Patentansprüche

1. Datenauswahlverfahren zur Verminderung des Dekodierrechenaufwands eines Fahrzeug-zu-X-Kommunikationssystems (401),
wobei mittels einer Kommunikationseinheit (402) Fahrzeug-zu-X-Botschaften (31) empfangen und versendet werden,
wobei die Fahrzeug-zu-X-Botschaften (31) jeweils mindestens einen Nutzdatenanteil (34) und jeweils mindestens einen Kopfdatenanteil (32) umfassen,
wobei der jeweils mindestens eine Kopfdatenanteil (32) unkodiert übertragen wird und
wobei der jeweils mindestens eine Nutzdatenanteil (34) kodiert übertragen wird, wobei
auf Grundlage des jeweils mindestens einen Kopfdatenanteils (32) eine Gewichtung von empfangenen Fahrzeug-zu-X-Botschaften (31) untereinander in wenigstens zwei Kategorien vorgenommen wird,
wobei eine Dekodierung des jeweils mindestens einen Nutzdatenanteils (34) gewichtungsabhängig erfolgt.

2. Verfahren nach Anspruch 1,
**dadurch gekennzeichnet,**
**dass** eine Kodierung des mindestens einen Nutzdatenanteils eine Datenkomprimierung und/oder eine Datenkompatibilisierung umfasst und die Dekodierung des mindestens einen Nutzdatenanteils (34) eine Datenentkomprimierung und/oder eine systemabhängige Datenumwandlung umfasst.

3. Verfahren nach mindestens einem der Ansprüche 1 und 2,
**dadurch gekennzeichnet,**
**dass** der mindestens eine Kopfdatenanteil (32) mindestens eine der folgenden Informationen umfasst:
- satellitengestützte Positionsinformation eines Senders,
- Geschwindigkeitsinformation des Senders,
- Ausrichtungsinformation des Senders,
- Identitätsinformation des Senders,
- Zeitstempel,
- Gattungsinformation der Fahrzeug-zu-X-Botschaft (31) und
- Genauigkeitskennzeichung mindestens einer der umfassten Informationen.

4. Verfahren nach mindestens einem der Ansprüche 1 bis 3,
**dadurch gekennzeichnet,**
**dass** der Kopfdatenanteil (32) ein von unterschiedlichen Fahrzeug-zu-X-Kommunikationssystemen (401) ohne vorausgehende Dekodierung verarbeitbares Datenformat besitzt.

5. Verfahren nach Anspruch 1,
**dadurch gekennzeichnet,**
**dass** die wenigstens zwei Kategorien die ihnen zugeordneten Fahrzeug-zu-X-Botschaften (31) als "relevant" oder "irrelevant" kennzeichnen, wobei nur als "relevant" gekennzeichnete Botschaften dekodiert werden.

6. Verfahren nach mindestens einem der Ansprüche 1 bis 5,
**dadurch gekennzeichnet,**
**dass** die Gewichtung der während des Fahrzeugbetriebs empfangenen Fahrzeug-zu-X-Botschaften (31) in Abhängigkeit mindestens eines der folgenden Faktoren anpassbar ist:
- Eigengeschwindigkeit des Empfängers,
- Relativgeschwindigkeit des Empfängers zum Sender,
- Abstand des Empfängers zum Sender,
- voraussichtlicher Eintrittszeitpunkt des Senders in eine kritische Zone rund um den Empfänger,
- relative Fahrtrichtung des Empfängers zum Sender und
- Straßenklasse,
wobei die kritische Zone eine anpassbare Ausdehnung und Ausformung aufweist und wobei die Straßenklasse abhängig von einer zulässigen Höchstgeschwindigkeit und/oder einer Fahrbahnbreite und/oder einer Anzahl von Fahrbahnen und/oder einer Nähe zu Ortschaften und/oder von Wetterverhältnissen gebildet wird.

7. Verfahren nach mindestens einem der Ansprüche 1 bis 6,
**dadurch gekennzeichnet,**
**dass** die Gewichtung in eine der Anzahl der empfangenen Fahrzeug-zu-X-Botschaften (31) entsprechende Anzahl von Kategorien vorgenommen wird, wobei die Nutzdatenanteile (34) der empfangenen Fahrzeug-zu-X-Botschaften (31) in absteigender Gewichtungsreihenfolge dekodiert werden bis die Rechenkapazität erschöpft ist oder alle Nutzdatenanteile (34) der empfangenen Fahrzeug-zu-X-Botschaften (31) dekodiert sind.

8. Verfahren nach mindestens einem der Ansprüche 1 bis 7,
**dadurch gekennzeichnet,**
**dass** der Dekodierung des Nutzdatenanteils (34) eine Datensicherheitsprüfung eines Datensicherheitsanteils (33) der Fahrzeug-zu-X-Botschaft (31), insbesondere eine Datensicherheitsprüfung eines von der Fahrzeug-zu-X-Botschaft (31) umfassten digitalen Datensicherheitszertifikats, vorausgeht.

9. Verfahren nach mindestens einem der Ansprüche 1 bis 8,
**dadurch gekennzeichnet,**
**dass** eine Weiterverarbeitung des dekodierten Nutzdatenanteils (34) von mindestens einem Fahrerassistenzsystem durchgeführt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist.

10. Verfahren nach Anspruch 2,
**dadurch gekennzeichnet,**
**dass** die Kodierung nach dem ASN.1-Standard erfolgt.

11. Fahrzeug-zu-X-Kommunikationssystem (401),
welches insbesondere ein Verfahren nach mindestens einem der Ansprüche 1 bis 10 ausführt,
umfassend eine Kommunikationseinheit (402) zum Empfangen und Versenden von Fahrzeug-zu-X-Botschaften (31),
eine Generierungseinheit (406) zum Generieren von zu versendenden Fahrzeug-zu-X-Botschaften (31) mit jeweils mindestens einem Kopfdatenanteil (32) und jeweils mindestens einem Nutzdatenanteil (34),
eine Kodiereinheit (403) zum Kodieren des jeweils mindestens einen Nutzdatenanteils (34) der zu versendenden Fahrzeug-zu-X-Botschaften (31) und zum Dekodieren eines jeweils mindestens einen kodierten Nutzdatenanteils (34) von empfangenen Fahrzeug-zu-X-Botschaften (31) und
eine Gewichtungseinheit (404) zum Verarbeiten eines jeweils mindestens einen unkodierten Kopfdatenanteils (32) der empfangenen Fahrzeug-zu-X-Botschaften (31), wobei die Gewichtungseinheit (404) eine Gewichtung der empfangenen Fahrzeug-zu-X-Botschaften (31) untereinander in wenigstens zwei Kategorien auf Grundlage des jeweils mindestens einen Kopfdatenanteils (32) vornimmt,
wobei die Kodiereinheit (403) eine Dekodierung des jeweils mindestens einen Nutzdatenanteils (34) gewichtungsabhängig durchführt.

12. System nach Anspruch 11,
**dadurch gekennzeichnet,**
**dass** das System (401) zusätzlich eine Datensicherheitseinheit (405) zum Erstellen eines Datensicherheitsanteils (33) der zu versendenden Fahrzeug-zu-X-Botschaften (31) und zum Prüfen des Datensicherheitsanteils (33) der empfangenen Fahrzeug-zu-X-Botschaften (31) umfasst.

13. System nach mindestens einem der Ansprüche 11 und 12,
**dadurch gekennzeichnet,**
**dass** die Kommunikationseinheit (402) und/oder die Generierungseinheit (406) und/oder die Gewichtungseinheit (404) und/oder die Kodiereinheit (403) und/oder die Datensicherheitseinheit (405) einen gemeinsamen Chipsatz, insbesondere ein gemeinsames elektronisches Rechenwerk (407) umfassen.

14. System nach mindestens einem der Ansprüche 10 bis 13,
**dadurch gekennzeichnet,**
**dass** die Kommunikationseinheit (402) zur Kommunikation mittels mindestens einer der folgenden Verbindungsarten ausgebildet ist:
- WLAN-Verbindung (409), insbesondere nach IEEE 802.11,
- ISM-Verbindung (Industrial, Scientific, Medical Band),
- Bluetooth,
- ZigBee,
- UWB,
- WiMax,
- Infrarotverbindung und
- Mobilfunkverbindung (410).

15. Verwendung des Verfahrens nach mindestens einem der Ansprüche 1 bis 10 in einem Kraftfahrzeug.

## Claims

1. A data selection method for reducing the decoding computational complexity of a vehicle-to-X communication system (401),
wherein a communication unit (402) is used to transmit and receive vehicle-to-X messages (31), wherein the vehicle-to-X messages (31) each comprise at least one useful data portion (34) and at least one header data portion (32),
wherein the at least one header data portion (32) in each case is transmitted in uncoded form, and
wherein the at least one useful data portion (34) in each case is transmitted in coded form, wherein
received vehicle-to-X messages (31) are weighted into at least two categories on the basis of the at least one header data portion (32) in each case,
wherein the at least one useful data portion (34) in each case is decoded on the basis of the weighting.

2. The method according to Claim 1,
**characterized in that**
a coding of the at least one useful data portion comprises a data compression and/or a data compatibilization and the decoding of the at least one useful data portion (34) comprises a data decompression and/or a system-dependent data transformation.

3. The method according to at least one of Claims 1 and 2, **characterized in that**
the at least one header data portion (32) comprises at least one of the following elements of information:
- satellite-based position information of a transmitter,
- speed information of the transmitter,
- alignment information of the transmitter,
- identity information of the transmitter,
- time stamp,
- type information of the vehicle-to-X message (31), and
- accuracy identification of at least one of the comprised elements of information.

4. The method according to at least one of Claims 1 to 3, **characterized in that**
the header data portion (32) has a data format which can be processed by different vehicle-to-X communication systems (401) without previous decoding.

5. The method according to Claim 1,
**characterized in that**
the at least two categories identify the vehicle-to-X messages (31) allocated to them as "relevant" or "irrelevant", wherein only those messages identified as being "relevant" are decoded.

6. The method according to at least one of Claims 1 to 5,
**characterized in that**
the weighting of the vehicle-to-X messages (31) received during vehicle operation can be adjusted as a function of at least one of the following factors:
- own speed of the receiver,
- relative speed of the receiver with respect to the transmitter,
- distance of the receiver from the transmitter,
- expected time of entry of the transmitter into a critical zone around the receiver,
- relative direction of travel of the receiver with respect to the transmitter, and
- class of road,
wherein the critical zone has an adjustable extent and form, and wherein the class of road is formed depending on a permissible maximum speed and/or a lane width and/or a number of lanes and/or a proximity to places and/or weather conditions.

7. The method according to at least one of Claims 1 to 6, **characterized in that**
the weighting is effected into a number of categories corresponding to the number of the received vehicle-to-X messages (31), wherein the useful data portions (34) of the received vehicle-to-X messages (31) are decoded in descending order of weighting until the computational capacity is exhausted or all of the useful data portions (34) of the received vehicle-to-X messages (31) are decoded.

8. The method according to at least one of Claims 1 to 7, **characterized in that**
a data security check of a data security portion (33) of the vehicle-to-X message (31), in particular a data security check of a digital data security certificate comprised by the vehicle-to-X message (31), precedes the decoding of the useful data portion (34).

9. The method according to at least one of Claims 1 to 8, **characterized in that**
a further processing of the decoded useful data portion (34) of at least one driver assistance system is performed, wherein the at least one driver assistance system is configured to warn a driver and/or to intervene in the vehicle control and/or to override a driver's command.

10. The method according to Claim 2,
**characterized in that**
the coding is carried out in accordance with the ASN.1 standard.

11. A vehicle-to-X communication system (401),
which in particular executes a method according to at least one of Claims 1 to 10, comprising a communication unit (402) for receiving and transmitting vehicle-to-X messages (31),
a generating unit (406) for generating vehicle-to-X messages (31) which are to be transmitted and which each have at least one header data portion (32) and at least one useful data portion (34),
a coding unit (403) for coding the at least one useful data portion (34) in each case of the vehicle-to-X messages (31) to be transmitted and for decoding at least one coded useful data portion (34) in each case of received vehicle-to-X messages (31), and
a weighting unit (404) for processing at least one uncoded header data portion (32) in each case of the received vehicle-to-X messages (31), wherein the weighting unit (404) weights the received vehicle-to-X messages (31) into at least two categories on the basis of the at least one header data portion (32) in each case,
wherein the coding unit (403) decodes the at least one useful data portion (34) in each case on the basis of the weighting.

12. The system according to Claim 11,
**characterized in that**
the system (401) additionally comprises a data security unit (405) for creating a data security portion (33) of the vehicle-to-X messages (31) to be transmitted,
and for checking the data security portion (33) of the received vehicle-to-X messages (31).

13. The system according to at least one of Claims 11 and 12, **characterized in that** the communication unit (402) and/or the generating unit (406) and/or the weighting unit (404) and/or the coding unit (403) and/or the data security unit (405) comprise(s) a common chipset, in particular a common electronic computer unit (407).

14. The system according to at least one of Claims 10 to 13,
**characterized in that**
the communication unit (402) is configured to communicate by means of at least one of the following types of connection:
- a WLAN connection (409), in particular in accordance with IEEE 802.11,
- an ISM (Industrial, Scientific, Medical Band) connection,
- Bluetooth®,
- ZigBee,
- UWB,
- WiMax,
- an infrared connection, and
- a mobile radio connection (410).

15. Use of the method according to at least one of Claims 1 to 10 in a motor vehicle.

## Revendications

1. Procédé de sélection de données pour la réduction de la complexité de calcul de décodage d'un système de communication de véhicule à X (401),
des messages de véhicule à X (31) étant reçus et envoyés au moyen d'une unité de communication (402), les messages de véhicule à X (31) comprenant respectivement au moins une composante de données utiles (34) et respectivement au moins une composante de données d'en-tête (32),
la respectivement au moins une composante de données d'entête (32) étant transmise non codée et
la respectivement au moins une composante de données utiles (34) étant transmise codée,
une pondération de messages de véhicule à X (31) reçus entre eux étant exécutée en au moins deux catégories, sur la base de la respectivement au moins une composante de données d'en-tête (32),
un décodage de la respectivement au moins une composante de données utiles (34) étant effectuée en fonction de la pondération.

2. Procédé selon la revendication 1,
**caractérisé en ce qu'**
un codage de l'au moins une composante de données utiles comprend une compression de données et/ou une compatibilisation de données et **en ce que** le décodage de l'au moins une composante de données utiles (34) comprend une compression de données et/ou une conversion de données en fonction du système.

3. Procédé selon au moins l'une des revendications 1 et 2, **caractérisé en ce que**
l'au moins une composante de données d'en-tête (32) comprend au moins l'une des informations suivantes :
- des informations de position assistées par satellite d'un émetteur,
- des informations de vitesse de l'émetteur,
- des informations d'orientation de l'émetteur,
- des informations d'identité de l'émetteur,
- un horodateur,
- des informations de classe du message de véhicule à X (31) et
- un marquage de précision d'au moins une des informations comprises.

4. Procédé selon au moins l'une des revendications 1 à 3,
**caractérisé en ce que**
la composante de données d'en-tête (32) possède un format de données exploitable sans décodage préalable par différents systèmes de communication de véhicule à X (401).

5. Procédé selon la revendication 1,
**caractérisé en ce que**
les au moins deux catégories désignent les messages de véhicule à X (31) leur étant assignés comme « pertinents » ou « non pertinents », seuls les messages désignés comme « pertinents » étant décodés.

6. Procédé selon au moins l'une des revendications 1 à 5,
**caractérisé en ce que**
la pondération des messages de véhicule à X (31) reçus pendant le fonctionnement du véhicule est ajustable en fonction d'au moins un des facteurs suivants :
- vitesse propre du récepteur,
- vitesse relative du récepteur par rapport à l'émetteur,
- distance du récepteur à l'émetteur,
- l'instant d'entrée prévu de l'émetteur dans une zone critique autour du récepteur,
- la direction de déplacement relative du récepteur par rapport à l'émetteur et
- la classe de route,
la zone critique présentant une extension et une forme ajustables et la classe de route étant formée en fonction d'une vitesse maximale autorisée et/ou d'une largeur de voie et/ou d'un nombre de voies et/ou d'une proximité à des localités et/ou de conditions météorologiques.

7. Procédé selon au moins l'une des revendications 1 à 6,
**caractérisé en ce que**
la pondération est effectuée dans un nombre de catégories correspondant au nombre de messages de véhicule à X (31) reçus, les composantes de données utiles (34) des message de véhicule à X (31) reçus étant décodées dans un ordre de pondération décroissant, jusqu'à ce que la capacité de calcul soit épuisée ou jusqu'à ce que toutes les composantes de données utiles (34) des messages de véhicule à X (31) reçus soient décodées.

8. Procédé selon au moins l'une des revendications 1 à 7,
**caractérisé en ce que**
un contrôle de sécurité de données d'une composante de sécurité de données (33) du message de véhicule à X (31), en particulier un contrôle de sécurité de données d'un certificat de sécurité de données numérique compris par le message de véhicule à X (31) précède le décodage de la composante de données utiles (34).

9. Procédé selon au moins l'une des revendications 1 à 8,
**caractérisé en ce que**
un post-traitement de la composante de données utiles (34) décodée est effectué par au moins un système d'aide à la conduite, l'au moins un système d'aide à la conduite étant formé pour l'avertissement d'un conducteur et/ou pour intervenir au niveau du pilotage du véhicule et/ou pour prendre la priorité sur une consigne du conducteur.

10. Procédé selon la revendication 2,
**caractérisé en ce que**
le codage est effectué selon le standard ASN.1.

11. Système de communication de véhicule à X (401),
lequel exécute en particulier un procédé selon au moins l'une des revendications 1 à 10,
comprenant une unité de communication (402) pour la réception et l'envoi de messages de véhicule à X (31), une unité de génération (406) pour la génération de messages de véhicule à X (31) devant être envoyés avec respectivement au moins une composante de données d'en-tête (32) et respectivement au moins une composante de données utiles (34),
une unité de codage (403) pour le codage de l'au moins une composante de données utiles (34) des messages de véhicule à X (31) devant être envoyés et pour le décodage de la respectivement au moins une composante de données utiles (34) codées de messages de véhicule à X (31) et une unité de pondération (404) pour le traitement de la respectivement au moins une composante de données d'en-tête (32) non codée des messages de véhicule à X (31), l'unité de pondération (404) effectuant une pondération des messages de véhicule à X (31) entre eux dans au moins deux catégories sur la base de la respectivement au moins une composante de données d'en-tête (32),
l'unité de codage (403) exécutant un décodage de la respectivement au moins une composante de données utiles (34) en fonction de la pondération.

12. Système selon la revendication 11,
**caractérisé en ce que**
le système (401) comprend en outre une unité de sécurité de données (405) pour la génération d'une composante de sécurité de données (33) des messages de véhicule à X (31) devant être envoyés et pour le contrôle de la composante de sécurité de données (33) des messages de véhicule à X (31) reçus.

13. Système selon au moins l'une des revendications 11 et 12,
**caractérisé en ce que**
l'unité de communication (402) et/ou l'unité de génération (406) et/ou l'unité de pondération (404) et/ou l'unité de codage (403) et/ou l'unité de sécurité de données (405) comprennent un chipset commun, en particulier une unité de calcul électronique commune (407).

14. Système selon au moins l'une des revendications 10 à 13,
**caractérisé en ce que**
l'unité de communication (402) est formée pour la communication au moyen d'au moins un des modes de connexion suivants :
- connexion WLAN (409), en particulier conformément à IEEE 802.11,
- connexion ISM (bandes industrielle, scientifique, médicale),
- Bluetooth,
- ZigBee,
- ULB,
- WiMax,
- connexion infrarouge et
- connexion par téléphonie mobile (410).

15. Utilisation du procédé selon au moins l'une des revendications 1 à 10 dans un véhicule à moteur.
